Europäisches Patentamt

European Patent Office

Office européen des brevets

(19)

(11) **EP 0 866 392 B1**

(12) **EUROPÄISCHE PATENTSCHRIFT**

(45) Veröffentlichungstag und Bekanntmachung des Hinweises auf die Patenterteilung:
**30.09.1998 Patentblatt 1998/40**

(51) Int Cl.⁶: **G05D 1/00**, G05D 23/19

(21) Anmeldenummer: **97118912.1**

(22) Anmeldetag: **30.10.1997**

(54) **Verfahren und Schaltungsanordnung zur schaltstossarmen Leistungssteuerung elektrischer Lasten**

Method and switching device for commutation noise-free power control of electrical loads

Méthode et dispositif de commutation pour contrôler la puissance de charges électriques sans impulsion de commutation

(84) Benannte Vertragsstaaten:
**AT BE CH DE DK ES FI FR GB GR IE IT LI LU NL PT SE**

(43) Veröffentlichungstag der Anmeldung:
**23.09.1998 Patentblatt 1998/39**

(73) Patentinhaber: **LEISTER ELEKTRO-GERÄTEBAU**
**6056 Kägiswil (CH)**

(72) Erfinder: **Gerber, Tobias Manfred, Dipl.-Ing.**
**6064 Kerns (CH)**

(74) Vertreter: **Klocke, Peter, Dipl.-Ing.**
**Klocke - Späth - Neubauer**
**Patentanwälte,**
**Kappelstrasse 8**
**72160 Horb (DE)**

(56) Entgegenhaltungen:
**EP-A- 0 188 886          EP-A- 0 225 657**
**EP-A- 0 303 314          DE-A- 3 601 555**
**DE-A- 3 834 433          FR-A- 2 667 754**
**GB-A- 2 237 942          US-A- 4 331 914**
**US-A- 4 878 011**

**Beschreibung**

Die vorliegende Erfindung betrifft ein Verfahren und eine Schaltungsanordnung zur schaltstoßarmen Leistungssteuerung elektrischer Lasten, die in wenigstens zwei Teillasten elektrisch aufgeteilt sind, wobei zur Erzielung der geforderten Heizleistung diese in einem bestimmten Leistungsbereich auf die Teillasten weitgehend gleichmäßig verteilt sind.

Werden elektrische Lasten am Versorgungsnetz, zum Beispiel öffentliches Wechselstromnetz, variiert, treten aufgrund der Impedanz von Versorgungsleitungen Änderungen der Netzspannung auf. Diese Spannungsänderungen (auch als Flicker bezeichnet) werden in bestimmten Frequenz-/Spannungsbereichen vom Menschen als störend empfunden und müssen daher nach der Norm IEC 1000-3-3 und IEC 1000-3-5 in engen Grenzen (Flickerpegel) gehalten werden. Müssen elektrische Lasten, wie zum Beispiel Heizungen, oft ein- bzw. ausgeschaltet werden, um eine gute Regelcharakteristik zu erreichen, so können nur begrenzte Lastenänderungen pro Zeiteinheit geschaltet werden. Dies wird durch die Aufteilung der Gesamtlast in einzelne, getrennte und nicht gleichzeitig geschaltete Teillasten oder durch Aufteilung der Gesamtleistung in Leistungsstufen erreicht.

Die DE 36 01 555 C2 beschreibt eine Steuereinrichtung zur stufenweisen Leistungsschaltung eines elektrischen Durchlauferhitzers in Abhängigkeit vom Leistungsbedarf, wobei in einem Zyklus, der mehrere Netzvollwellen umfaßt, zur Leistungssteuerung mehr oder weniger Netzhalbwellen auf wenigstens einen Heizkörper durchgeschaltet werden und in dem Zyklus die gleiche Anzahl von positiven und negativen Halbwellen auftritt. Hierzu werden in einem elektronischen Speicher mehrere unterschiedliche Steuersignalmuster gespeichert, die in Abhängigkeit vom Leistungsbedarf entsprechende Netzhalbwellenmuster auf einen elektrischen Heizkörper durchschalten, wobei jedes Steuersignal des jeweiligen Musters eine Halbwelle oder mehrere aufeinanderfolgende Netzhalbwellen auf den elektrischen Heizkörper durchschaltet. Dabei ist jedes Netzhalbwellenmuster so ausgelegt, daß dessen Kurzzeit-Flickerpegel unter der Störgrenze liegt, und die Netzhalbwellenmuster in der elektrischen Leistung abgestuft sind, in dem sie eine unterschiedliche Anzahl von durchgeschalteten Halbwellen umfassen. Zum Schalten von Leistungszwischenstufen in einem mehrere Netzhalbwellenmuster umfassenden Zyklus werden Netzhalbwellenmuster unterschiedlicher Lasten aufeinanderfolgend geschaltet. Gemäß der Patentschrift wird erreicht, daß sich durch die Vorgabe von unterschiedlichen, jeweils in sich gleichspannungsfreien, in Steuersignalmustern abgespeicherten Netzhalbwellenmustern und deren Abarbeitung in einem festgelegten Zyklus, die notwendige Flickerfreiheit verbunden mit einer feinstufigen Heizungsleistungssteuerung erreichen läßt.

Aus der DE 37 26 535 A1 ist ein Verfahren zur schaltstoßarmen Leistungssteuerung elektrischer Lasten bekannt, bei dem die Heizlasten in wenigstens zwei Unterlasten elektrisch aufgeteilt sind und die Unterlasten jeder Last wahlweise in wenigstens drei Haupt-Leistungsstufen in Serienschaltung, wechselweise einzeln oder in Parallelschaltung an ein Wechselstromnetz schaltbar sind. Ausgehend von einer der Haupt-Leistungsstufen, wird in einem sich laufend wiederholenden Zyklus von wenigstens zwei Wechselstrom-Halbwellen während wenigstens eine Halbwelle in jedem Zyklus auf die jeweils nächstniedrigere Haupt-Leistungsstufe geschaltet. Die dabei verwendeten Schaltzyklen weisen eine Länge jeweils sechs Halbwellen auf, die jeweils nach Leistungsbedarf geschaltet werden.

Aus der DE 105 04 470 A1 ist ein elektrischer Durchlauferhitzer bekannt, bei dem die Abstufung der Heizleistung in bekannter Weise durch entsprechendes Ausblenden von Teilbereichen des üblicherweise sinusförmigen Heizstromes erfolgt. Die Schaltung des Heizstromes erfolgt in den Nulldurchgängen. Bei diesem elektrischen Durchlauferhitzer ist die Gesamtheizleistung auf verschiedene Heizkörper aufgeteilt und die einzelnen Heizkörper weisen eine unterschiedlich große Nennheizleistung auf. Mittels einer Steuerschaltung wird die jeweilige Heizleistung auf möglichst viele Heizkörper geschaltet. Die Abstufung bezüglich der Heizleistung erfolgt in 1/3-Schritten (0/3, 1/3, 2/3 oder 3/3) der Nennheizleistung. Das Durchschalten der Heizleistung bzw. des Heizstromes auf die Heizkörper erfolgt während sechs Netzhalbwellen, wobei, wie bereits in der DE-OS 37 26 535 A1 beschrieben, eine entsprechende Anzahl von Halbwellen entsprechend der Heizleistung geschaltet wird. So wird bei 1/3 Leistung die erste und vierte Halbwelle, bei 2/3 Leistung die zweite, dritte und vierte und fünfte Halbwelle und bei 3/3 Leistung alle Halbwellen geschaltet. Zur Erzielung der gewünschten Leistung werden nacheinander die einzelnen Heizstufen, die eine unterschiedliche Nennleistung aufweisen, geschaltet, wobei darauf geachtet wird, daß alle drei Lasten gleichmäßig mit einer Heizstufe belegt sind, bevor die nächsthöhere Heizstufe bei einer Teillast zugeschaltet wird.

Durch diese bekannten Lastenaufteilungen kann nur eine Last direkt geschaltet werden. Die Aufteilung erfolgt durch leistungsproportionales festes Zuschalten von Teillasten und die Regelung über eine Teillast. Dies führt bei einer Heizung, insbesondere wenn es sich um die Erwärmung von Luft, beispielsweise bei Heißluftschweißgeräten, oder auch anderen Schweißgeräten und Heißluftgeräten handelt, zu unterschiedlichen Temperaturen in den verschiedenen Lastbereichen, da die Leistungsabgaben der Teillasten bis zu 100 Prozent differieren können. Große Temperatur- und Lastunterschiede führen zu Materialspannungen und frühzeitiges Altern von Heizkörpern.

Gemäß dem Stand der Technik lassen sich durch die Ansteuerung einzelner Halbwellen Leistungsstufen erreichen, wobei diese Pulsmustersteuerung aufgrund der Norm für die Flickerrate nur für Lasten bis circa 2,5 kW eingesetzt werden kann. Müssen größere Lasten angesteuert werden, so sind meist komplizierte und aufwendige elektrische Schaltungen notwendig. Da in der Regel die Pulsmuster nach der Leistungsanforderung wahlfrei hintereinander gesetzt werden, ist die zu erwartende Schaltstoßbelastung des Netzes nicht eindeutig auszumachen.

Der vorliegenden Erfindung liegt daher die Aufgabe zugrunde, eine Möglichkeit der Ansteuerung von Lasten vorzuschlagen, die ein flickerfreies Schalten innerhalb der vorgegebenen Norm einer Vielzahl voll Teillasten ermöglicht, wobei die Teillasten bei jeder Leistungsanforderung gleichmäßig belastet werden.

Diese Aufgabe wird erfindungsgemäß durch ein Verfahren mit den Merkmalen des Hauptanspruchs sowie durch eine Schaltungsanordnung mit den Merkmalen des Anspruchs 8 gelöst. Weitere Ausgestaltungen des Verfahrens sind den auf den Hauptanspruch bezogenen Unteransprüchen zu entnehmen.

Bei dem erfindungsgemäß ausgestalteten Verfahren werden aus drei aufeinanderfolgenden Netzhalbwellen, die eine sogenannte Muster-Periode bilden, drei getrennte Pulsmusterfolgen A, B und C gebildet, die der jeweiligen Netzhalbwelle entsprechen und deren negative Halbwellen gleichgerichtet sind. Jede Pulsmusterfolge A, B und C schaltet über eine vorgegebene Periodendauer, die als PWM-Periode bezeichnet wird, mindestens eine Teillast, wobei entsprechend der maximalen Anzahl der Pulse pro PWM-Periode jedes Pulsmuster A, B oder C maximal ein Drittel der Nennleistung einer Teillast, nachfolgend als Pulsmusterleistung bezeichnet, schaltet. Jede Teillast wird somit von einer oder mehreren Pulsmusterfolgen entsprechend der Gesamtleistungsanforderung geschaltet, so daß bei der Abgabe von 100 Prozent der Nennleistung der jeweiligen Teillast diese über die gesamte PWM-Periode mit der maximalen Pulsmusterleistung jeder Pulsmusterfolge beaufschlagt wird. Entsprechend wird die jeweilige Teillast bei 1/3 Nennleistung mit einer Pulsmusterfolge und bei 2/3 Nennleistung mit zwei Pulsmusterfolgen beaufschlagt. Des weiteren wird mittels Pulsweitenmodulation (PWM) von mindestens einer Pulsmusterfolge entsprechend der Gesamtleistungsanforderung über eine vorgebbare PWM-Periodendauer durch die Anzahl der Pulse der jeweiligen Pulsmusterfolge A, B und/oder C während dieser PWM-Perioden die jeweilige Teillast geschaltet. Durch diese Pulsweitenmodulation, die grundsätzlich bei jeder Pulsmusterfolge durchgeführt werden kann, können die Zwischenwerte zwischen den vorstehend erwähnten 1/3-, 2/3- und 3/3-Stufen eingestellt werden. Durch die Aufteilung auf drei Pulsmuster wird über eine PWM-Periode von einem Pulsmuster ein Drittel der Nennleistung der betreffenden Teillast geschaltet. Bei dem tatsächlichen Schaltvorgang jedes Pulses wird die jedoch immer die volle Nennleistung der Teillast geschaltet. Das Schalten erfolgt immer mit 1/3 der doppelten Netzfrequenz, während bei einer Pulsmusterfolge 1/3 der Halbwellenfrequenz geschaltet wird. Die PWM-Periode und auch die Halbwellenfrequenz sind auf die Netzfrequenz synchronisiert. Es ist auch eine Unterteilung einer Muster-Periode in Vielfache von drei möglich, wobei jedoch weiterhin das grundsätzlich Prinzip erhalten bleibt und auf drei reduziert werden kann. Insgesamt wird durch die längeren Periodenschwankungen das Flickern und die Temperaturschwankungen einzelner Teillasten reduziert.

Über die Anzahl der Muster-Perioden kann gemäß einer weiteren Ausbildung der Erfindung, innerhalb einer PWM-Periode die Anzahl der Schaltstufen der Teillasten eingestellt werden. Damit kann die Genauigkeit der vorstehend erwähnten Zwischenwerte, die durch die PWM hergestellt werden, beeinflußt werden.

Gemäß einer weiteren besonders bevorzugten Ausführungsform wird die Pulsweitenmodulation nur bei einer Pulsmusterfolge, beispielsweise Pulsmusterfolge A, durchgeführt, wobei die Pulsmusterfolge dabei auf eine beliebige Teillast geschaltet sein kann. Bei Überschreiten der maximalen Pulsmusterleistung dieser Pulsmusterfolge wird die nächste freie Pulsmusterfolge, beispielsweise B oder C, mit der maximalen Pulsmusterleistung geschaltet und entsprechend der Gesamtleistungsanforderung die Anzahl der Pulse der Pulsmusterfolge A reduziert. Dies erfolgt derart, daß die jeweilige Pulsmusterfolge mit der vorstehend erwähnten maximalen Pulsmusterleistung (ein Drittel der Nennleistung) einer Teillast beaufschlagt wird und bei der reduzierten Pulsmusterfolge A erneut die PWM durchgeführt wird. Dies erlaubt die feine Abstufung der Leistung und Verteilung auf einzelne Teillasten. Um nun bei dem Einstellen der geforderten Leistung diese immer auf die einzelnen Teillasten gleichmäßig zu verteilen, wird gemäß einer weiteren, besonders bevorzugten Ausführungsform die nächste freie, auf eine andere Teillast geschaltete Pulsmusterfolge mit der maximalen Pulsmusterleistung der Teillast geschaltet. Damit wird bereits innerhalb einer PWM-Periode die zu schaltende Leistung auf verschiedene Teillasten verteilt.

Im Hinblick auf einen möglichst einfachen Schaltungsaufbau und eine möglichst geringe Flickerrate werden die Pulsmusterfolgen und deren Aufschaltung auf die Teillasten zur Einstellung der angeforderten Gesamtleistung gemäß einer weiteren Ausbildung zyklisch vertauscht. Dies erfolgt derart, daß zuerst alle Pulsmusterfolgen A, B und C mit der maximalen Pulsmusterleistung belegt werden, bevor eine Pulsmusterfolge A, B oder C erneut mit der Aufschaltung der maximalen Pulsmusterleistung belegt wird.

Zur weiteren Verbesserung der Flickerrate wird in der nachfolgenden PWM-Periode die PW-modulierte Pulsmusterfolge A der nächsten, noch nicht PW-modulierten Teillast zugeordnet. Damit wird die PWM in der Pulsmusterfolge A von einer Teillast auf die nächste Teillast weitergegeben und infolge dessen jede einzelne Teillast in aufeinanderfolgenden PWM-Perioden zumindest mit einem Teil der geforderten Gesamtleistung beaufschlagt. Infolge dessen treten keine hohen Leistungsunterschiede zwischen den einzelnen Teillasten auf. Des weiteren erlaubt diese Möglichkeit eine Reduzierung und sichere Einhaltung der geforderten Flickerrate.

Letztere wird insbesondere dadurch noch verbessert, daß gemäß einer weiteren Ausbildung nacheinander zyklisch vertauscht, die PW-modulierte Pulsmusterfolge den einzelnen Teillasten zugeordnet wird und gleichzeitig die PW-modulierten Pulsmusterfolgen zweier aufeinanderfolgenden PWM-Perioden symmetrisch zur Mitte zwischen den beiden PWM-Perioden angeordnet werden. Dies bedeutet, daß eine beispielsweise am Anfang einer PWM-Periode liegende PW-modulierte Pulsmusterfolge A in der nächsten PWM-Periode zur Mitte zwischen den beiden PWM-Perioden gespiegelt, am Ende dieser Pulsmusterfolge angeordnet ist. Wie vorstehend bereits erläutert, hat dabei die Pulsmusterfolge A in der ersten PWM-Periode von der einen Teillast auf die nächste Teillast in der nächsten PWM-Periode gewechselt. Dies setzt sich immer zwischen zwei aufeinanderfolgenden PWM-Perioden fort, so daß eine System-Periode, nach deren Ende der Ablauf der Lastzuschaltung durch die einzelnen Pulsmusterfolgen wieder von Neuem beginnt, bei geradzahligen Teillasten sich aus der geradzahligen Anzahl der verwendeten Teillasten und bei ungeradzahligen Teillasten aus der doppelten Anzahl der Teillasten ergibt. Dadurch wird auf besondere Art und Weise unerwünschtes Flickern vermieden, da für die Netzspannung kein Flicker verursachender Schaltvorgang durchgeführt wird, wenn die PW-modulierte Pulsmusterfolge von einer Teillast auf die nächste geschaltet wird. Es erfolgt dabei lediglich ein Ausschalten einer Teillast und gleichzeitig ein Einschalten der nächsten Teillast. Durch die zyklische Vertauschung wird der gleiche Vorgang auch mit den mit der maximalen Pulsmusterleistung beaufschlagten Pulsmuster und den diesen wechselnd zugeordneten Teillasten durchgeführt.

Die Schaltungsanordnung gemäß der Erfindung weist einen Mustergenerator zur Erzeugung von drei getrennten gleichgerichteten Pulsmusterfolgen (A, B, C) aus drei aufeinanderfolgenden Netzhalbwellen und eine Ansteuereinrichtung pro anzusteuernder Teillast auf. Mindestens eine Ansteuereinrichtung besitzt mindestens einen Pulsweitenmodulation-Generator (PWM-Generator), der in Verbindung mit dem Mustergenerator über eine vorgegebene Periodendauer (PWM-Periode) entsprechend der Gesamtleistungsanforderung eine entsprechende Anzahl von Pulsen der jeweiligen Pulsmusterfolge A, B und /oder C erzeugt, und jede Ansteuereinrichtung besitzt eine entsprechende Anzahl von Komparatoren, wobei die Gesamtzahl von PWM-Generatoren und Komparatoren pro Ansteuereinrichtung drei beträgt und jeder PWM-Generator bzw. Komparator maximal ein Drittel der Nennleistung einer Teillast schaltet, und über jeden Komparator in Verbindung mit dem Mustergenerator über die Dauer der PWM-Periode eine der Pulsmusterfolgen A, B oder C mit der maximalen Anzahl der Pulse pro PWM-Periode schaltbar ist. Des weiteren verfügt die Schaltungsanordnung über logische Verknüpfungseinrichtungen zum Anlegen von mindestens einer Pulsmusterfolge entsprechend der Gesamtleistungsanforderung über eine vorgebbare PWM-Periodendauer durch die Anzahl der Pulse der jeweiligen Pulsmusterfolge A; B und/oder C während dieser PWM-Periodendauer an die jeweilige Teillast, und eine Steuereinrichtung zur Aktivierung der Generatoren und Komparatoren auf.

Die Erfindung ermöglicht somit die schaltstoßarme Ansteuerung einer Vielzahl von einphasigen und dreiphasigen Lasten, wobei sich die Stromstoßbelastung des Netzes durch die zuschaltbaren Lasten genau im voraus errechnen lassen. Durch entsprechende Auswahl der einzelnen Schaltstufen und der Pulse pro Zeiteinheit kann ein bedarfsgerechtes Optimum für den jeweiligen Anwendungsfall unter Berücksichtigung der entsprechenden Flickernormen sicher realisiert werden. Die Leistungsaufteilung erfolgt dabei gleichmäßig auf die Teillasten, wobei nicht mehr für jede neue Leistungsstufe ein neues Ansteuerungsverfahren generiert werden muß. Die Teillasten müssen nicht unbedingt gleich groß sein, jedoch sind gleich große Teillasten für die Flickerrate hilfreich. Es besteht die Möglichkeit der modularen Verknüpfung. Wird eine weitere Teillast generiert, so kann diese mit nur geringen Änderungen an das Gesamtschaltungssystem angebracht werden, ohne daß das Verfahrensprinzip geändert wird. Das grundsätzliche Prinzip ist auch auf dreiphasigen Lasten (in Stern- oder Dreieckschaltung) übertragbar, wobei insbesondere bei in Dreieck geschaltete Lasten die Besonderheiten des Drehstromnetzes in dem Fachmann geläufiger Art und Weise berücksichtigt werden müssen, um Unsymmetrien des Netzes zu vermeiden. In Stern geschaltete Lasten verhalten sich bei mehreren Lasten hinsichtlich einer Phase wie einphasige Lasten. Bei der Verwendung einer auf zwei Teillasten ausgerichteten Schaltungsanordnung kann diese für zwei einphasige Lasten oder für dreiphasige Lasten zur schaltstoßarmen Ansteuerung verwendet werden. Diese Ansteuerung ist besonders vorteilhaft bei (Luft)Heizgeräten, da sämtliche Teillasten gleichmäßig erwärmt werden und dadurch auch die Lufttemperatur von einer Teillast zur nächsten keinen großen Schwankungen unterliegt. Des weiteren unterliegen die Wicklungen durch die gleichmäßige Ansteuerung einem geringeren Streß aufgrund geringer Temperaturunterschiede. Bei hohen Leistungen müssen nicht mehr so hohe Anforderungen an die Heizwicklung gestellt werden.

Nachfolgend wird die Erfindung anhand von Ausführungsbeispielen in Verbindung mit den begleitenden Zeichnungen näher erläutert. Es stellen dar:

Fig. 1      die Pulsmusteraufteilung basierend auf der Netzfrequenz;

Fig. 2      ein Pulsmuster für zwei Lasten bei verschiedenen Leistungsanforderungen;

Fig. 3      ein Pulsmuster für drei Lasten bei verschieden Leistungsanforderungen und mit gegenüber Fig. 2 geänderter Anzahl von Musterperioden pro PWM-Stufe;

Fig. 4      (a) die Aufteilung der angeforderten Leistung auf Vergleicherstufen; (b) das Tastverhältnis für eine PWM-Schaltstufe und (c); und

Fig. 5    eine Schaltungsanordnung für zwei Teillasten.

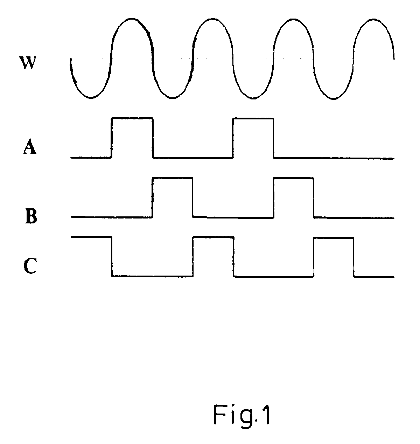

Figur 1 zeigt die Pulsmusteraufteilung mit einem Wechselstromnetz W und den Halbwellen des Wechselstromnetzes zugeordneten Pulsmusterfolgen A, B, C. Mittels dieser Pulsmusterfolgen A, B und C erfolgt die Ansteuerung der jeweiligen Teillasten. Dabei kann jede Pulsmusterfolge einer oder mehreren Teillasten zugeordnet werden, um deren Schaltvorgang zu beeinflussen. Bei den nachfolgenden Ausführungsbeispielen bilden drei Netzhalbwellen und deren zugeordnete Pulse der einzelnen Pulsmusterfolgen A, B, C eine Musterperiode.

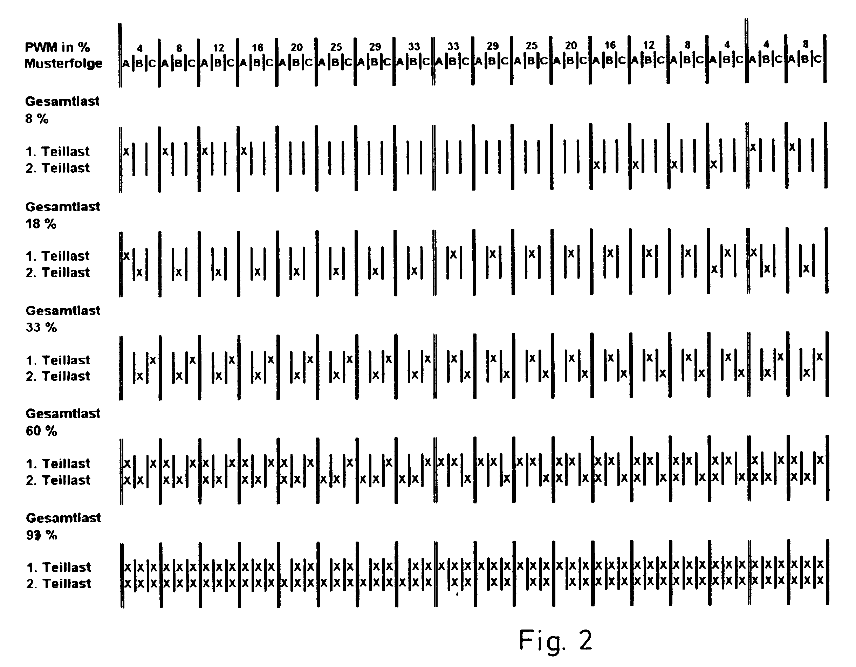

Figur 2 zeigt das Pulsmuster über im wesentlichen zwei PWM-Perioden für vier verschiedene Laststufen mit 8 %, 18 %, 33 %, 60 % und 93 % der Gesamtnennleistung der beiden Teillasten. In diesem Ausführungsbeispiel wurden acht Schaltstufen pro PWM-Periode festgelegt. Daraus folgt bei einer maximalen Leistung von 33 % (= 1/3) der Nennleistung einer Teillast, daß pro Schaltstufe circa 4 % der Nennleistung geschaltet werden kann (33 % ./. 8 ≈ 4 %). Des weiteren wurden eine Musterperiode (= 3 Halbwellen)/PWM-Schaltstufe gewählt. Die Anzahl der innerhalb einer PWM-Periode zur Verfügung stehenden Halbwellen ergibt sich aus folgender Formel:

Anzahl der Schaltstufen x (Anzahl der Musterperioden pro Schaltstufe x

Anzahl der Wellen pro Musterperiode).

Bei dem Ausführungsbeispiel gemäß der Figur 2 ergibt dies 24 Halbwellen 8 x (1 x 3) innerhalb einer PWM-Periode. Bei dem Ausführungsbeispiel ist zur Vereinfachung jede Halbwelle mit den Buchstaben A, B bzw. C bezeichnet. Da es sich um zwei Lasten handelt und somit die Zahl der Lasten geradzahlig ist, besteht eine Gesamtperiode aus zwei PWM-Perioden. Nach der Gesamtperiode beginnt der Vorgang wieder von vorne. Zur Verdeutlichung sind bei jeder Musterperiode die Leistungszunahme angegeben, die sich durch Zuschalten eines Musters für die jeweilige Teillasten ergeben. Die zweite Musterperiode ist zu der ersten Musterperiode gespiegelt, so daß entsprechend für die zweite Musterperiode die Schaltstufenwerte zum Ende der zweiten Musterperiode hin entsprechend abnehmen. Die Zuschaltung des jeweiligen Pulses des Pulsmusters A, B oder C wird in dieser Darstellungsweise durch Kreuze symbolisiert.

In den Ausführungsbeispielen ist immer mehr das Pulsmuster A PW-moduliert, während die anderen Pulsmuster über eine PWM-Periode entweder vollständig ein- bzw. ausgeschaltet sind. Durch die Zuschaltung eines Pulsmusters, beispielsweise B, über die gesamte Länge der PWM-Periode auf eine Teillast, wird diese während dieser Zeit mit 33 % Nennleistung beaufschlagt.

Zur Einstellung einer gewünschten Leistungsanforderung muß die angeforderte Leistung auf die einzelnen Teillasten derart verteilt werden, daß nur ein Pulsmuster A, das einer Teillast zugeordnet ist, PW-moduliert wird, während sämtliche anderen Pulsmuster über die gesamte PWM-Periode zugeschaltet sind. An dem Beispiel mit einer Leistungsanforderung von 18 % ergibt dies während der ersten PWM-Periode die volle Zuschaltung der zweiten Teillast mittels des Pulsmusters B und die Zuschaltung der ersten Teillast mittels des Pulsmusters A nur während der ersten Schaltstufe. Dies gibt insgesamt eine Leistung von 37 %, verteilt auf zwei Lasten (Mittelwert) errechnet sich daraus die Gesamtleistung von circa 18 %. Nach Ablauf der ersten PWM-Periode wird die zweite Teillast mit dem Pulsmuster A belegt, das PW-moduliert wird, während die erste Teillast vollständig mit dem Pulsmuster B belegt wird. Diese zyklische Vertauschung und Spiegelung an der Mitte zwischen den beiden aufeinanderfolgenden PWM-Perioden, dient einerseits der Senkung der Flickerrate, da netzseitig nicht erkennbar ist, daß eine Teillast ausgeschaltet und dafür die andere Teillast eingeschaltet wird, und außerdem der gleichmäßigen Beaufschlagung der Teillasten zwecks kontinuierlicher Erwärmung. Nach Ablauf der zweiten PWM-Periode ist die Systemperiode beendet und der Vorgang beginnt wieder von neuem. Dieses Prinzip ist in allen dargestellten Leistungsanforderungsbeispielen realisiert.

Bei einer Leistungsanforderung von 8 % wird nur die erste Teillast mit dem Pulsmuster A in der ersten PWM-Periode PW-moduliert beaufschlagt. Der Wechsel auf die zweite Teillast erfolgt dann in der zweiten PWM-Periode. Die Gesamtleistung beträgt 16 % /2 = 8 %.

Bei einer Leistungsanforderung von 33 % wird in dem Ausführungsbeispiel die Pulsmusterfolge C voll auf die erste Teillast und die Pulsmusterfolge B auf die zweite Teillast geschaltet. Nach Ablauf einer PWM-Periode wechselt die Zuordnung der Teillasten zu den Pulsmusterfolgen, wie aus der Figur ersichtlich.

Bei einer Leistungsanforderung von 60 % wird während der ersten PWM-Periode die zweite Teillast mit der Pulsmusterfolge A und der Pulsmusterfolge B vollständig belegt, was eine Teillastbelegung von 66 % ergibt. Die erste Teillast wird mit der Pulsmusterfolge C vollständig belegt und bei der Pulsmusterfolge A wird eine PWM durchgeführt, die die erste Teillast mit 20 % belegt. Das gibt insgesamt für die erste Teillast circa 53 %, so daß sich daraus eine ungefähre Gesamtbelastung von 60 % ((53 % + 66 %)/2) ergibt. Nach Beendigung der ersten PWM-Periode erfolgt die bereits erwähnte Spiegelung und Umkehrung der Zuschaltung. Entsprechend bei jeden weiteren PWM-Perioden.

In entsprechender Art und Weise ergibt sich nun die Gesamtleistung von 93 % aus den in der Figur 2 dargestellten Pulsmusterfolgen. Die zweite Teillast ist danach während der ersten PWM-Periode mit 100 % belegt, während die erste Teillast durch die Pulsmusterfolgen B und C mit 66 % und durch die PW-modulierte Pulsmusterfolge A mit 20 % belegt ist. Dies ergibt entsprechend für die Gesamtbelastung ungefähr 93 % (186 % ./. 2).

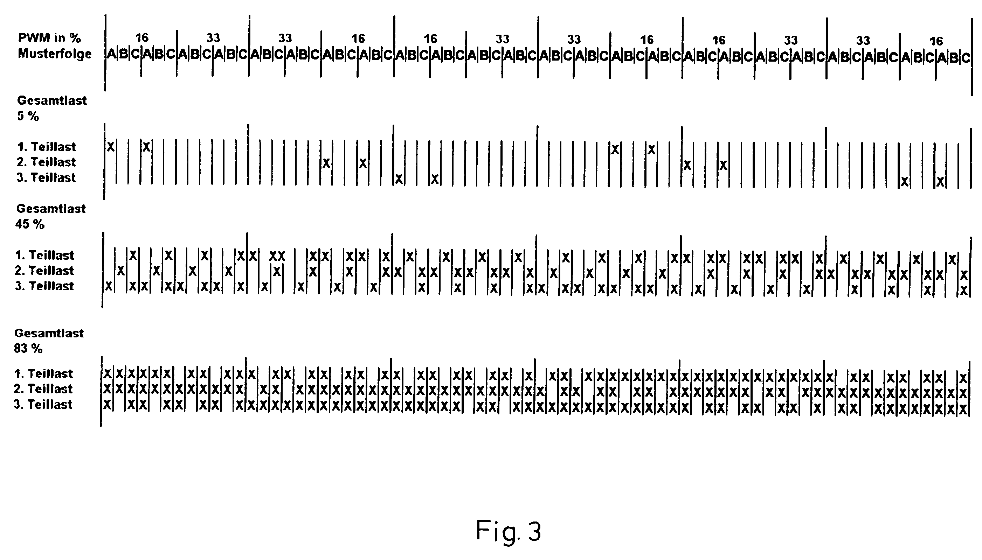

Figur 3 zeigt ähnlich der Figur 2 ein Pulsmuster jedoch mit drei Lasten. Des weiteren wurden bei diesem Ausführungsbeispiel zwei Musterperioden pro Schaltstufe ausgewählt. Außerdem wurden die Schaltstufen für die Pulsweitenmodulation ebenfalls auf zwei festgelegt, so daß sich daraus pro Schaltstufe ungefähr 16 % Leistung ergeben (33 % / 2). Infolge dessen weist eine PWM-Periode 2 x (2 x 3) = 12 Halbwellen auf. Bei diesem, in der Figur 3 zur Veranschaulichung dargestellten Ausführungsbeispiel wurden drei Leistungsanforderungen mit 5%, 45 % und 83% ausgewählt. Die Pulsweitenmodulation wird nach wie vor lediglich mit der Pulsmusterfolge A durchgeführt und diese, wie vorstehend bereits beschrieben, von einer Teillast in der ersten PWM-Periode auf die zweite Teillast in der nächsten PWM-Periode und dann auf die dritte Teillast in der dritten PWM-Periode geschaltet. Auch hier sind die schaltenden Pulse der Pulsmusterfolge zweier aufeinanderfolgender PWM-Perioden symmetrisch zur Mitte der beiden aufeinanderfolgenden PWM-Perioden, um für die Flickerrate günstige Schaltwerte zu erhalten. Aufgrund der ungeraden Anzahl der Lasten bedarf es sechs PWM-Perioden für eine Systemperiode bis der Zyklus wieder von vorne beginnt. Aufgrund der Auswahl der Anzahl der Musterperioden muß für den kleinsten Leistungswert eine Pulsmusterfolge mit zwei Pulsen geschaltet werden. Während der ersten PWM-Periode bleiben die übrigen Pulsmusterfolgen B und C ausgeschaltet, so daß die Pulsmusterfolge A auf der Teillast 1 eine Leistung von circa 16 % belegt, während die übrigen Pulsmusterfolgen auf den beiden anderen Teillasten 0 % belegen. Der Mittelwert daraus ergibt circa 5 %.

Entsprechend verhält es sich bei der Leistungsanforderung mit 45 %, bei der in der ersten PWM-Periode die erste Teillast mit der vollständigen Pulsmusterfolge A belegt, d. h. in diesem Fall findet hier keine PWM statt. Die zweite Teillast ist vollständig mit den Pulsmusterfolgen A und B und die dritte Teillast vollständig mit der Pulsmusterfolge C innerhalb einer PWM-Periode belegt. Daraus ergibt sich eine Belegung der ersten Teillast mit 33 %, der zweiten Teillast mit 67 % und der dritten Teillast mit 33 %, was einen Gesamtwert bei drei Lasten von circa 44 % ergibt. Nach der ersten PWM-Periode erfolgt, wie bereits vorstehend mehrfach erläutert wiederum die zyklische Vertauschung und Spiegelung bezüglich der Mitte zwischen zwei aufeinanderfolgenden PWM-Perioden. Die Spiegelung kommt aufgrund der vollen Belegung der Pulsmusterfolgen hier jedoch nicht so deutlich zum Vorschein, wie bei dem Beispiel mit der 5 % Leistungsanforderung. In der zweiten PWM-Periode wird die Pulsmusterfolge A auf die zweite Teillast geschaltet, während die ursprünglich auf die dritte Teillast geschaltete Pulsmusterfolge C nunmehr auf die erste Teillast geschaltet wird. Entsprechend werden die ursprünglich auf die zweite Teillast geschalteten Pulsmusterfolgen A, B nunmehr auf die dritte Teillast geschaltet. Diese zyklische Vertauschung setzt sich von PWM-Periode zu PWM-Periode fort.

Die Leistungsanforderung von 83% in Figur 3 ergibt sich entsprechend mit einer Belegung in der ersten PWM-Periode der ersten Teillast mit 66% aus den Pulsmusterfolgen B und C und 16% für die PW-modulierte Pulsmusterfolge A, der zweiten Teillast mit 100% und der dritten Teillast mit 66% aus den Pulsmusterfolgen A und C. Dies ergibt insgesamt 248% ((66% + 16%) + 100% + 66%), aufgeteilt auf drei Lasten (248% / 3) circa 83%. In den darauffolgenden Perioden erfolgt wieder die zyklische Vertauschung der Pulsmusterfolgen auf die Teillasten. Nach sechs PWM-Perioden ist eine System-Periode abgeschlossen.

Für die Realisierung des erfindungsgemäßen Verfahrens wird die angeforderte Leistung in Vergleicherstufen (Komparatoren) aufgeteilt, wobei die einzelnen Komparatoren immer in gleichmäßigen Leistungsstufen abgestuft sind und bis zur 100-%igen Leistung aktiv bleiben. Die Anzahl der Komparatoren hängt von der Aufteilung der Last ab, wobei sich die Anzahl der Komparatoren aus folgender Gleichung ergibt:

Anzahl der Komparatoren = 3 x (Anzahl Teillasten) - 1.

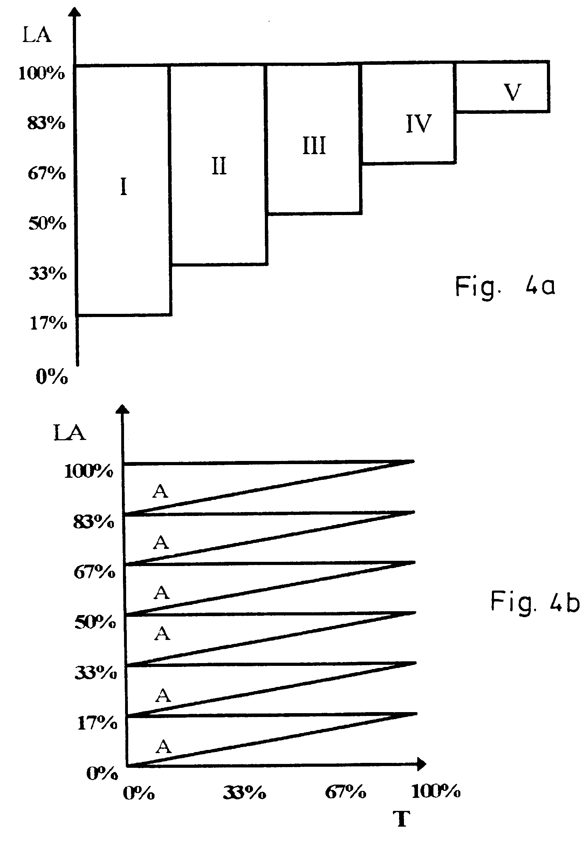

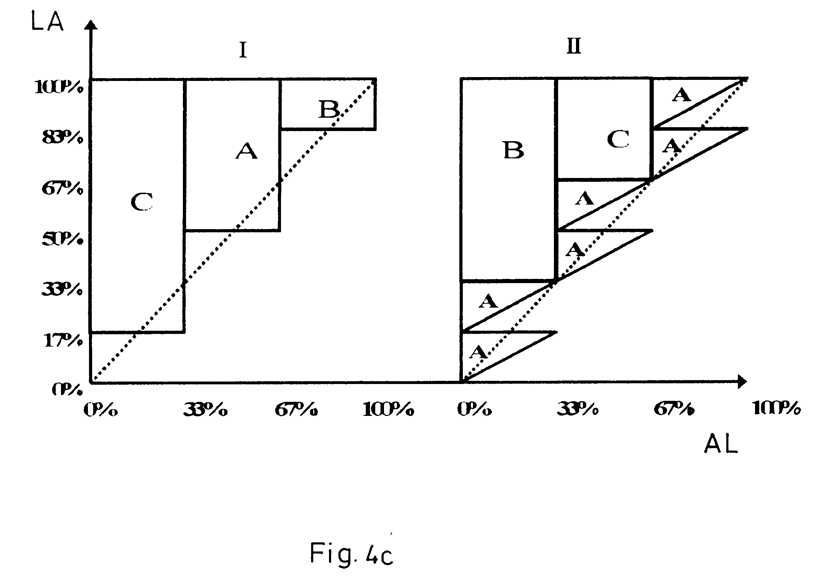

In Figur 4 a ist in einem Schaubild die Aufteilung der geforderten Leistung LA auf fünf Komparatoren, die bei zwei Teillasten erforderlich sind, dargestellt. Es ist ersichtlich, daß der Komparator I bei 17 % zugeschaltet wird und über die volle Leistungsanforderung zugeschaltet bleibt. Entsprechend verhält es sich für die weiteren Komparatoren II, III, IV und V.

In der Figur 4 b ist das Tastverhältnis T für eine PWM-Schaltstufe mit ebenfalls zwei Lasten bezüglich der Leistungsanforderung LA beispielhaft dargestellt. Synchronisiert auf die Netzfrequenz wird eine PWM aufgebracht, die folgende Eigenschaften aufweist:

1. Die Auflösung und kleinster diskreter Schritt ist 2/3 Netzfrequenz;
2. die feste Periodenlänge ist ein ganzzahliger Teiler der Netzfrequenz durch drei;
3. die Periode ist synchronisiert zur Netzfrequenz;
4. die PWM ist verknüpft mit einem Muster (A, B oder C);
5. wahlweise werden entweder die geraden PWM-Perioden zuerst geschaltet und dann abgeschaltet und anschließend in den ungeraden PWM-Perioden zuerst der Ruheanteil und dann der Schaltanteil angesteuert oder umgekehrt. Es sind somit gleiche Tastverhältnisse zwischen Schalt- und Ruheanteil in der geraden bzw. ungeraden PWM-Periode vorhanden, wie bereits in Figur 2 und 3 dargestellt und erläutert;

6. das Tastverhältnis (Modulation) der PWM ist abhängig von der Anzahl zu steuernder Teillasten. Werden mehrere getrennt angesteuerte Leistungssteller verwendet, so ergibt sich das Tastverhältnis, wie in der Figur mit zwei Lasten dargestellt, aus: Leistungsanforderung - 3 x Anzahl der Leistungssteller.

Die Figur 4 b zeigt, daß bei einer Leistungsanforderung von 17 % das Tastverhältnis 100 % beträgt, d. h. bei dieser Leistung wird eine andere Pulsmusterfolge voll auf eine Teillast geschaltet.

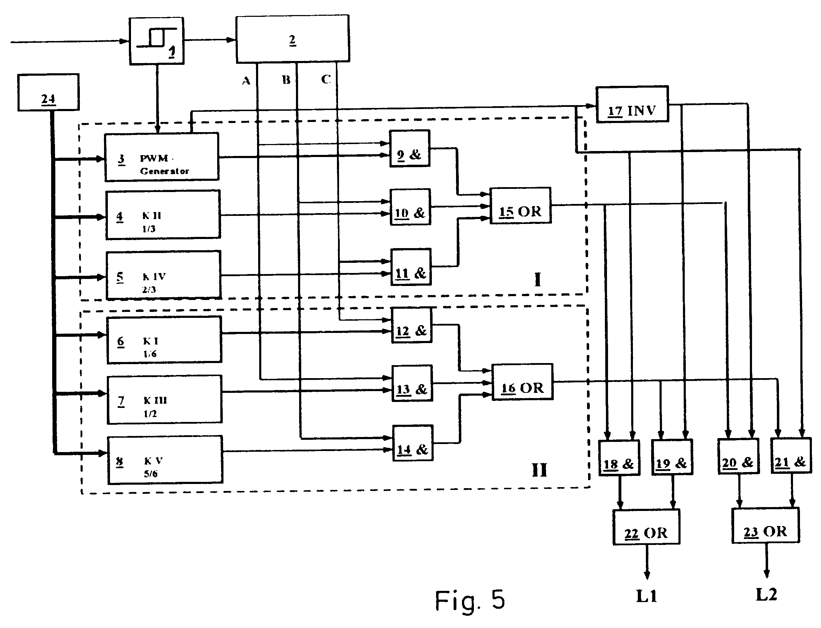

Figur 5 zeigt blockschaltbildmäßig den prinzipiellen Aufbau einer Ansteuerungsschaltung für zwei Lasten L1 und L2, die beispielsweise über nicht dargestellte Triacs als Leistungssteller betätigt werden. Die Netzfrequenz des Wechselstromnetzes wird abgegriffen und über einen Pulsformer 1 mit doppelter Netzfrequenz auf einen Mustergenerator 2 und mit 2/3 Netzfrequenz auf einen PWM-Generator 3 gegeben. Parallel zu dem PWM-Generator 3 befinden sich die Komparatoren K I bis K V gemäß Figur 4 a. So ist mit der Ziffer 4 der Komparator K II, der bei 1/3-Leistung zuschaltet, mit der Ziffer 5 der Komparator K IV, der bei 2/3-Leistung zuschaltet, mit Ziffer 6 der Komparator K I der bei 1/6-Leistung zuschaltet, mit Bezugsziffer 7 der Komparator K III, der bei halber Leistung zuschaltet, und mit Bezugsziffer 8 der Komparator K V, der bei 5/6-Leistung zuschaltet bezeichnet. Der Ausgang des PWM-Generators 3 wird zusammen mit dem Ausgang A des Mustergenerators 2, der die Pulsmusterfolge A bezeichnet, auf ein UND-Glied 9 gelegt. Der Ausgang des mit der Bezugsziffer 4 bezeichneten Komparators K III wird zusammen mit der vom Mustergenerator 2 am Ausgang B abgegebenen Musterfolge B auf das UND-Glied 10 und der Ausgang des mit der Bezugsziffer 5 bezeichneten Komparators K IV zusammen mit der am Ausgang C des Mustergenerators 2 abgegebenen Pulsmusterfolge C auf das UND-Glied 11 gelegt. Die Ausgänge der UND-Glieder werden mit dem UND-Glied 15 verknüpft und parallel auf ein UND-Glied 18 bzw. 20 gegeben. Ähnlich verhält es sich mit den mit den Bezugsziffern 6, 7 und 8 bezeichneten Komparatoren K I, K III und K IV, die gemeinsam mit der Pulsmusterfolge C, A und B auf die UND-Glieder 12, 13 bzw. 14 gelegt werden. Die Ausgänge dieser UND-Glieder 12, 13, 14 werden einem ODER-Glied 16 zugeführt und dessen Ausgang parallel an die UND-Glieder 19 und 21 angelegt. Zur Realisierung der vorstehend beschriebenen zyklischen Vertauschung wird außerdem ein jede zweite PWM-Periode wechselndes Signal des PWM-Generators 3 an eine Invertierstufe 17 und deren Ausgangssignal an die UND-Glieder 19 und 20 gelegt. Des weiteren wird dieses von dem PWM-Generator 3 abgegebene Signal ohne Inversion den UND-Gliedern 18 und 21 zugeführt. Die Ausgänge der UND-Glieder 18 und 19 werden über das ODER-Glied 22 und die Ausgänge der UND-Glieder 20 und 21 über das ODER-Glied 23 verknüpft und die jeweiligen Ausgänge einem entsprechenden Leistungssteller für die jeweilige Last zugeführt. Mittels der Steuereinrichtung 24 wird die Leistungsanforderung dem PWM-Generator 3 bzw. dem Komparatoren 4 bis 8 zugeführt und diese entsprechend aktiviert.

Wie bereits in Verbindung mit den Figuren 2 und 3 erläutert, wird die PWM-Modulation lediglich mit der Pulsmusterfolge A durchgeführt und mit dem UND-Glied 9 verknüpft. Ab einer Leistungsanforderung > 17 % wird der Komparator K I mit der Bezugsziffer 6 aktiviert und die Musterfolge C durchgeschaltet. Bis zum Zuschalten des nächsten Komparators erfolgt nun wieder die Pulsweitenmodulation über den PWM-Generator 3 zusammen mit der Pulsmusterfolge A. Ab einer Leistungsanforderung > 33 % wird der mit der Bezugsziffer 4 versehene Komparator K II aktiviert, so daß das Pulsmuster B durchgeschaltet wird. Für alle nachfolgenden Zwischenbereiche wird, wie vorstehend bereits erläutert, die PWM mit dem Pulsmuster A durchgeführt und entsprechend der mit der Bezugsziffer 7 versehene Komparator K III bei einer Leistungsanforderung > 50 % aktiviert, um die Pulsmusterfolge A durchzuschalten, der mit der Bezugsziffer 5 versehene Komparator K IV bei einer Leistungsanforderung > 67 % aktiviert, um die Pulsmusterfolge C durchzuschalten, und der mit der Bezugsziffer 8 versehene Komparator K IV ab einer Leistungsanforderung > 83 % aktiviert, um die Pulsmusterfolge B durchzuschalten.

Figur 4 c zeigt die Leistungsanforderung LA und Ausgangsleistung AL der beiden verschiedenen in der Figur 5 gestrichelt angedeuteten Ansteuerungswege I und II, wobei der Ansteuerungsweg I aus den Komparatoren 6, 7 und 8 und der Ansteuerungsweg II aus dem PWM-Generator 3 und den Komparatoren 4, 5 gebildet wird. Figur 4 c zeigt die Aufteilung der Ausgangsleistung entsprechend der Leistungsanforderung auf die Pulsmuster.

Aus dem Ausführungsbeispiel ist ersichtlich, daß sich allgemein die folgende Systematik bei der Ansteuerung von Lasten ergibt:

1. Es müssen genauso viele Ansteuerwege aufgebaut werden, wie Lasten angesteuert werden sollen.
2. Der erste Ansteuerweg besteht aus zwei Komparatoren und einer PWM.
3. Jeder weitere Ansteuerweg besteht aus drei Komparatoren.
4. Jeder Komparator bzw. PWM wird einem Pulsmuster zugeordnet.
5. Jeder Ansteuerungsweg wird für eine PWM-Periode einer Last zugeordnet. Bei der nächsten PWM-Periode wird die Ansteuerung der nächsten Teillast weitergeschaltet.
6. Die PWM wird nur mit einem Pulsmuster, hier A, verknüpft.

7. Jedem weiteren Ansteuerweg wird ein fortlaufendes Pulsmuster zugeordnet (z.B. Ansteuerweg II: Pulsmuster B; Ansteuerweg III: Pulsmuster C; Ansteuerweg IV: Pulsmuster A; Ansteuerweg V: Pulsmuster B; ... )

8. Nach Verteilung der Pulsmuster an jede Steuerung wird mit dem ersten Ansteuerweg fortgefahren. Ziel ist es, jedem Ansteuerweg die drei Pulsmuster A, B, C zuzuordnen.

9. Die Komparatoren werden, wie in Verbindung mit Figur 4 a beschrieben, abgestuft und wie die Pulsmuster in aufsteigender Reihenfolge auf die Ansteuerwege verteilt. Dabei werden die Komparatoren so mit den Pulsmustern verknüpft, daß bei steigender Leistungsanforderung immer ein Pulsmuster in der Reihenfolge A, B, C, A, B, C, A .... zugeschaltet wird.

Mittels der Erfindung können eine Vielzahl von Lasten in einem Leistungsbereich von circa 2 kW bei Einhaltung der entsprechenden Norm für das Flickern geschaltet werden. Je weniger Schaltstufen in einer PWM-Periode vorgesehen sind, die für die PWM zur Verfügung stehen, um so einfacher wird der Aufbau der elektronischen Schaltung. Bei einem Ausführungsbeispiel wurde eine PWM mit 32 Schaltstufen und einem Pulsmuster pro Schaltstufe realisiert. Dies ergibt bei zwei Teillasten eine PWM-Periode von 96 Halbwellen und eine Systemperiode von 192 Halbwellen.

**Patentansprüche**

1. Verfahren zur schaltstoßarmen Leistungssteuerung elektrischer Lasten, die in wenigstens zwei Teillasten elektrisch aufgeteilt sind, wobei zur Erzielung der geforderten Heizleistung diese in einem bestimmten Leistungsbereich auf die Teillasten weitgehend gleichmäßig verteilt sind, **dadurch gekennzeichnet**, daß

   - aus drei aufeinanderfolgenden Netzhalbwellen (Muster-Periode) drei getrennte Pulsmusterfolgen A, B und C gebildet werden, die der jeweiligen Netzhalbwelle entsprechen, wobei die negativen Halbwellen gleichgerichtet werden;
   - jede Pulsmusterfolge A, B und C über eine vorgegebene Periode (PWM-Periode) mindestens eine Teillast schaltet, wobei entsprechend der maximalen Anzahl der Pulse pro PWM-Periode jedes Pulsmuster A, B oder C maximal ein Drittel der Nennleistung einer Teillast (Pulsmusterleistung) schaltet; und
   - mittels Pulsweitenmodulation (PWM) von mindestens einer Pulsmusterfolge entsprechend der Gesamtleistungsanforderung über eine vorgebbare PWM-Periodendauer durch die Anzahl der Pulse der jeweiligen Pulsmusterfolge A; B und/oder C während dieser PWM-Periode die jeweilige Teillast geschaltet wird.

2. Verfahren nach Anspruch 1, **dadurch gekennzeichnet**, daß über die Anzahl der Muster-Perioden innerhalb einer PWM-Periode die Anzahl der Schaltstufen der Teillasten eingestellt wird.

3. Verfahren nach Anspruch 1 oder 2, **dadurch gekennzeichnet**, daß die PWM nur bei einer eine Teillast schaltende Pulsmusterfolge (A) durchgeführt wird und bei Überschreiten der maximalen Pulsmusterleistung dieser Pulsmusterfolge (A) die nächste freie Pulsmusterfolge (B oder C) mit der maximalen Pulsmusterleistung geschaltet und entsprechend der Gesamtleistungsanforderung die Anzahl der Pulse der Pulsmusterfolge A PW-moduliert reduziert wird.

4. Verfahren nach Anspruch 3, **dadurch gekennzeichnet**, daß die nächste freie auf eine andere Teillast geschaltete Pulsmusterfolge mit der maximalen Pulsmusterleistung der Teillast geschaltet wird.

5. Verfahren nach Anspruch 4, **dadurch gekennzeichnet**, daß die Pulsmusterfolgen und deren Aufschaltung auf die Teillasten zur Einstellung der angeforderten Gesamtleistung zyklisch vertauscht werden, derart, daß zuerst alle Pulsmusterfolgen A, B und C mit der maximalen Pulsmusterleistung belegt werden, bevor eine Pulsmusterfolge A, B oder C erneut mit der Aufschaltung der maximalen Pulsmusterleistung belegt wird.

6. Verfahren nach einem der vorangegangenen Ansprüche 3 bis 5, **dadurch gekennzeichnet**, daß in der nachfolgenden PWM-Periode die PW-modulierte Pulsmusterfolge (A) der nächsten, noch nicht PW-modulierten Teillast zugeordnet wird.

7. Verfahren nach Anspruch 6, **dadurch gekennzeichnet**, daß nacheinander zyklisch vertauscht die PW-modulierte Pulsmusterfolge den einzelnen Teillasten zugeordnet wird und gleichzeitig die PW-modulierten Pulsmusterfolgen zweier aufeinanderfolgender PWM-Perioden symmetrisch zur Mitte zwischen den beiden PWM-Perioden angeordnet werden.

**8.** Schaltungsanordnung zur schaltstoßarmen Leistungssteuerung elektrischer Lasten, die in wenigstens zwei Teillasten elektrisch aufgeteilt sind, wobei zur Erzielung der geforderten Heizleistung diese in einem bestimmten Leistungsbereich auf die Teillasten weitgehend gleichmäßig verteilt sind, gekennzeichnet durch

- einen Mustergenerator (2) zur Erzeugung von drei getrennten gleichgerichteten Pulsmusterfolgen (A, B, C) aus drei aufeinanderfolgenden Netzhalbwellen;
- eine Ansteuereinrichtung (I, II) pro anzusteuernder Teillast,

-- wobei mindestens eine Ansteuereinrichtung mindestens einen Pulsweitenmodulation-Generator (PWM-Generator) (3) aufweist, der in Verbindung mit dem Mustergenerator (2) über eine vorgegebene Periodendauer (PWM-Periode) entsprechend der Gesamtleistungsanforderung eine entsprechende Anzahl von Pulsen der jeweiligen Pulsmusterfolge A, B und /oder C erzeugt, und
-- jede Ansteuereinrichtung (I, II) eine entsprechende Anzahl von Komparatoren (4, 5, 6, 7, 8) aufweist, wobei die Gesamtzahl von PWM-Generatoren (3) und Komparatoren pro Ansteuereinrichtung drei beträgt und jeder PWM-Generator bzw. Komparator maximal ein Drittel der Nennleistung einer Teillast schaltet, und über jeden Komparator in Verbindung mit dem Mustergenerator über die Dauer der PWM-Periode eine der Pulsmusterfolgen A, B oder C mit der maximalen Anzahl der Pulse pro PWM-Periode schaltbar ist,

- logische Verknüpfungseinrichtungen (9-16, 18-23) zum Anlegen von mindestens einer Pulsmusterfolge entsprechend der Gesamtleistungsanforderung über eine vorgebbare PWM-Periodendauer durch die Anzahl der Pulse der jeweiligen Pulsmusterfolge A; B und/oder C während dieser PWM-Periode an die jeweilige Teillast (L1, L2), und
- eine Steuereinrichtung (24) zur Aktivierung der Generatoren (3) und Komparatoren (4-8).

## Claims

**1.** A method of power control with low switching surges for electric loads which are divided electrically into at least two partial loads, whereby to achieve the required heating power, they are divided largely uniformly among the partial loads in a certain power range, characterized in that

- three separate pulse sample sequences A, B and C are formed from three successive system half waves (sample period), each corresponding to the respective system half wave, with rectification of the negative half waves;

- each pulse sample sequence A, B and C switches at least one partial load over a predetermined period (PWM period), with each pulse sample A, B or C switching a maximum of one third of the rated power of a partial load (pulse sample power) according to the maximum number of pulses per PWM period; and

- the respective partial load is switched by the number of pulses of the respective pulse sample sequence A, B and/or C during this PWM period by means of pulse width modulation (PWM) of at least one pulse sample sequence according to the total power demand over a selectable PWM period.

**2.** A method according to Claim 1, characterized in that the number of switching stages of the partial loads is set on the basis of the number of sample periods within a PWM period.

**3.** A method according to Claim 1 or 2, characterized in that PWM is performed with only one pulse sample sequence (A) switching a partial load, and on exceeding the maximum pulse sample power of this pulse sample sequence (A), the next free pulse sample sequence (B or C) is switched with the maximum pulse sample power, and the number of pulses of pulse sample sequence A is reduced with pulse width modulation according to the total power demand.

**4.** A method according to Claim 3, characterized in that the next free pulse sample sequence switched to another partial load is switched with the maximum pulse sample power of the partial load.

**5.** A method according to Claim 4, characterized in that the pulse sample sequences and their connection to the partial loads are interchanged in cycles to adjust the required total power in such a way that first all pulse sample sequences A, B and C are assigned to the maximum pulse sample power before a pulse sample sequence A, B or C is again assigned to connection of the maximum pulse sample power.

6. A method according to one of the preceding Claims 3 through 5, characterized in that in the subsequent PWM period, the PW-modulated pulse sample sequence (A) is assigned to the next partial load, which is not yet PW modulated.

7. A method according to Claim 6, characterized in that the PW-modulated pulse sample sequence is assigned to the individual partial loads in succession with a cyclic exchange, and at the same time, PW-modulated pulse sample sequences of two successive PWM periods are arranged between the two PWM periods and symmetrically with the center.

8. A circuit configuration for power control with low switching surges for electric loads which are divided electrically into at least two partial loads, with the latter being distributed largely uniformly among the partial loads in a certain power range to achieve the required heating power, characterized by

   - a sample generator (2) for generating three separate rectified pulse sample sequences (A, B, C) from three successive system half waves;

   - one control device (I, II) per partial load to be controlled,

   - where at least one control device has at least one pulse width modulation generator (PWM generator) (3) which generates a corresponding number of pulses of the respective pulse sample sequence A, B and/or C in conjunction with the sample generator (2) over a predetermined period (PWM period) according to the total power demand, and

   - each control device (I, II) has a corresponding number of comparators (4, 5, 6, 7, 8), with the total number of PWM generators (3) and comparators per control device being three, and each PWM generator or comparator switches a maximum of one third of the rated power of a partial load, and one of the pulse sample sequences A, B or C can be switched with the maximum number of pulses per PWM period over each comparator in conjunction with the sample generator for the duration of the PWM period,

   - logic elements (9-16, 18-23) for applying at least one pulse sample sequence to the respective partial load (L1, L2) according to the total power demand over a preselectable PWM period through the number of pulses of the respective pulse sample sequence A, B and/or C during this PWM period, and

   - a controlling element (24) for activating the generators (3) and comparators (4-8).

**Revendications**

1. Procédé pour le réglage automatique de la puissance de charges électriques, avec peu de chocs de manoeuvre, charges divisées électriquement en au moins deux charges partielles, selon lequel, pour obtenir la puissance de chauffe requise, ces charges sont réparties de façon amplement homogène dans une plage de puissance déterminée sur les charges partielles, caractérisé en ce que:

   - à partir de trois demi-ondes de réseau successives (modèle périodique) on forme trois trains d'impulsions modèles A, B et C distincts qui correspondent à la demi-onde de réseau respective, les demi-ondes négatives étant redressées,

   - chaque train d'impulsions modèles A, B et C enclenche au moins une charge partielle sur une période définie au préalable (période MIL), chaque modèle d'impulsions A, B ou C injectant dans le circuit un tiers, au maximum, de la puissance nominale d'une charge partielle (puissance du modèle d'impulsions) en fonction du nombre maximum d'impulsions par période MIL, et

   - par modulation d'impulsions en largeur (MIL) d'au moins un train d'impulsions modèles en fonction de la demande de puissance totale sur une durée de période MIL à définir au préalable, la charge partielle concernée est enclenchée par le nombre des impulsions du train d'impulsions modèles A, B et/ou C au cours de cette période MIL.

**2.** Procédé selon la revendication 1, caractérisé en ce que le nombre des étages de puissance des charges partielles est réglé par l'intermédiaire du nombre de périodes de modèle dans une période MIL.

**3.** Procédé selon la revendication 1 ou 2, caractérisé en ce que la MIL n'est exécutée que dans le cas d'un train d'impulsions modèle (A) injectant une charge partielle et qu'en cas de dépassement de la puissance maximale du modèle d'impulsion, ce train d'impulsions modèles (A) enclenche le train d'impulsions modèles libre le plus proche (B) ou (C) avec la puissance de modèle d'impulsions maximale, et en fonction de la demande de puissance totale, le nombre d'impulsions du train d'impulsions modèle (A) est réduit par modulation d'impulsions en largeur.

**4.** Procédé selon la revendication 3, caractérisé en ce que le train d'impulsions modèles libre suivant commuté sur une autre charge partielle est commuté avec la puissance d'impulsions modèles maximale de la charge partielle.

**5.** Procédé selon la revendication 4, caractérisé en ce que les trains d'impulsions modèles et leur pilotage sur les charges partielles sont permutées de façon cyclique pour ajuster la puissance totale demandée, de telle manière que dans une première phase tous les trains d'impulsions modèles (A, B et C) soient occupés par la puissance d'impulsions modèles maximale, avant qu'un train d'impulsions modèles (A, B ou C) soit de nouveau occupé par la reprise de la puissance d'impulsions modèles maximale.

**6.** Procédé selon l'une des revendications précédentes 3 à 5, caractérisé en ce que dans la période MIL suivante, le train d'impulsions modèles (A) ayant subi la modulation d'impulsions en largeur est affecté à la charge partielle suivante qui n'a pas encore subi la modulation d'impulsions en largeur.

**7.** Procédé selon la revendication 6, caractérisé en ce qu'en permutant de façon cyclique et successivement, le train d'impulsions modèles ayant subi la modulation en largeur est affecté aux charges partielles individuelles, et dans un même temps les trains d'impulsions modèles ayant subi la modulation d'impulsions en largeur de deux périodes MIL successives sont placés symétriquement par rapport au centre, entre les deux périodes MIL.

**8.** Configuration de circuit pour le réglage automatique de charges électriques avec peu de chocs de manoeuvre, charges qui sont divisées électriquement en au moins deux charges partielles, ces charges étant distribuées de manière amplement homogène entre les charges partielles dans une plage de puissance déterminée, en vue de l'obtention de la puissance de chauffe requise, caractérisé par:

-    un générateur de modèles (2) pour la production de trois trains d'impulsions modèles (A, B, C) distincts redressés, constitués de trois demi-ondes de réseau successives;

-    un dispositif pilote (I, II) pour chaque charge partielle à commander;

-    circuit dans lequel au moins un dispositif pilote présente au moins un générateur de modulation d'impulsions en largeur (générateur MIL) (3) qui produit en association avec le générateur de modèles (2), sur une durée de période définie au préalable (période MIL) et en fonction de la demande de puissance totale, un nombre correspondant d'impulsions du train d'impulsions modèles respectif A, B et/ou C, et

-    chaque dispositif pilote (I, II) présente un nombre correspondant de comparateurs (4, 5, 6, 7, 8), le nombre total de générateurs MIL (3) et de comparateurs par dispositif pilote étant de trois, et chaque générateur MIL ou comparateur produisant, au maximum, un tiers de la puissance nominale d'une charge partielle, et par l'intermédiaire de chaque comparateur en association avec le générateur de modèles, pendant la durée de la période MIL, un des trains d'impulsions modèles (A, B ou C) peut être injecté dans le circuit avec le nombre maximum d'impulsions par période MIL,

-    des dispositifs de connexion logiques (9-16, 18-23) pour appliquer au moins un train d'impulsions modèles en fonction de la demande de puissance totale, sur une durée de période MIL définissable au préalable, par le nombre des impulsions du train d'impulsions modèles concerné (A, B et/ou C) pendant cette période MIL, à la charge partielle respective (L1, L2), et

-    un dispositif de commande (24), pour activer les générateurs (3) et les comparateurs (4-8).

Fig.1

EP 0 866 392 B1

PWM in %
Musterfolge

| 4 | | 8 | | 12 | | 16 | | 20 | | 25 | | 29 | | 33 | | 33 | | 29 | | 25 | | 20 | | 16 | | 12 | | 8 | | 4 | | 4 | | 8 |
A|B|C A|B|C A|B|C A|B|C A|B|C A|B|C A|B|C A|B|C A|B|C A|B|C A|B|C A|B|C A|B|C A|B|C A|B|C A|B|C A|B|C A|B|C

Gesamtlast
8 %

1. Teillast
2. Teillast

Gesamtlast
18 %

1. Teillast
2. Teillast

Gesamtlast
33 %

1. Teillast
2. Teillast

Gesamtlast
60 %

1. Teillast
2. Teillast

Gesamtlast
93 %

1. Teillast
2. Teillast

Fig. 2

Fig. 3

EP 0 866 392 B1

Fig. 4a

Fig. 4b

Fig. 4c

EP 0 866 392 B1

Fig. 5

17